# DEMANDE DE BREVET EUROPEEN

(11) **EP 1 530 187 A1**
(43) Date de publication de la demande: **11.05.2005**
(21) Numéro de dépôt: 04292586.7
(22) Date de dépôt: 02.11.2004
(51) Int. Cl.: G09F 15/00, G03B 21/56

(54) **Dispositif d'affichage**

(30) Priorité: 07.11.2003 FR 0313149
(71) Demandeur: Driver, 95100 Argenteuil (FR)
(72) Inventeur: Ecran, Philippe, 92400 Courbevoie (FR); Rolle, Philippe, 60110 Meru (FR); Bernard, Patrice, 92210 Saint-Cloud (FR)
(74) Mandataire: Casalonga, Axel

(57) **Abrégé**

Un dispositif d'affichage comprend un cadre (2), un support (7) fixé sur le cadre et destiné à recevoir une affiche (11), une feuille protectrice amovible destinée à recouvrir une affiche disposée sur le support, des moyens de fixation de la feuille protectrice sur le cadre, et sur au moins un côté du cadre une pièce d'appui (14) mobile relativement au support entre une position ouverte dans laquelle la pièce d'appui est écartée du support et une position fermée dans laquelle la pièce d'appui est en appui sur un bord de ladite face du support pour pincer un bord d'une affiche et maintenir l'affiche avant de placer la feuille protectrice.

## Description

La présente invention concerne le domaine des dispositifs d'affichage, et plus particulièrement les dispositifs d'affichage permettant la suspension temporaire d'affiches.

Des dispositifs d'affichage sont placés dans les lieux publiques pour l'affichage d'informations (plan, directions, horaires...) ou l'affichage de publicités ou d'enseignes. On connaît notamment des dispositifs éclairés comprenant une source de lumière devant laquelle est disposé un support transmetteur de lumière sur lequel est apposée une affiche maintenue et protégée par une feuille protectrice transparente posée par dessus l'affiche et retenue sur le support. L'affiche n'est pas collée mais simplement maintenue par la feuille protectrice de façon à pouvoir changer l'affiche en réutilisant le dispositif d'affichage.

Lors d'un changement d'affiche, la feuille protectrice est déposée, l'ancienne affiche est retirée, puis la nouvelle affiche est disposée sur le support, et enfin la feuille protectrice est repositionnée. Néanmoins, un opérateur doit maintenir l'affiche sur le support tout en repositionnant la feuille protectrice qui vient recouvrir l'affiche. Cette opération n'est pas aisée. L'opérateur peut s'y reprendre à plusieurs fois, ce qui constitue une perte de temps. En outre, l'affiche peut être mal positionnée puisque l'opérateur doit lâcher l'affiche avant d'avoir complètement replacé la feuille protectrice.

Un but de la présente invention est de proposer un dispositif d'affichage facilitant une opération de remplacement d'affiche.

Un tel dispositif d'affichage comprend un cadre, un support fixé sur le cadre et destiné à recevoir une affiche sur une face d'affichage, une feuille protectrice amovible destinée à recouvrir une affiche disposée sur le support, et des moyens de fixation de la feuille protectrice sur le cadre. Selon un aspect de l'invention, le dispositif comprend sur au moins un côté du cadre une pièce d'appui mobile entre une position ouverte dans laquelle la pièce d'appui est écartée du support et une position fermée dans laquelle la pièce d'appui est en appui sur un bord de ladite face du support pour pincer un bord d'une affiche disposée entre le support et la pièce d'appui et maintenir l'affiche avant de placer la feuille protectrice.

Ainsi, lorsque l'on place une nouvelle affiche, il est possible de coincer préalablement un bord de l'affiche à l'aide de la pièce d'appui, de façon à maintenir l'affiche en position, puis de repositionner une feuille protectrice sans difficulté.

Dans un dispositif particulièrement ergonomique, la pièce d'appui est mobile en translation au support selon une direction permettant d'écarter la pièce d'appui de ladite surface du support pour insérer le bord d'une affiche entre la pièce d'appui et ladite face du support. Ainsi, la pièce d'appui peut être tirée en position ouverte à l'aide des indexes des mains, une affiche étant positionnée simultanément à l'aide des pouces appuyant et déplaçant le bord de l'affiche sur le support, avant de relâcher la cornière lorsque l'affiche est correctement positionnée.

Avantageusement, la pièce d'appui est sollicitée en position fermée par un élément élastique, qui agit de préférence de façon permanente lorsque la pièce d'appui est en position ouverte, de sorte que la pièce d'appui retourne par défaut en position fermée ce qui améliore l'ergonomie en dispensant un opérateur d'avoir à lâcher l'affiche pour repositionner la cornière.

Dans un mode de réalisation d'un dispositif à deux faces d'affichage, le dispositif comprend deux pièces d'appui mobiles en appui sur des faces opposées du support et reliées entre elles par au moins un élément élastique de rappel tendant à les rapprocher.

Pour améliorer une ergonomie, le cadre peut comprendre sur ledit au moins un côté un chapeau monté sur le cadre en étant mobile en translation perpendiculairement au support, ledit chapeau étant relié à une pièce d'appui pour entraîner cette dernière en translation. Le chapeau permet d'actionner facilement la pièce d'appui. Avantageusement, le chapeau comprend des portions de préhension faisant saillie perpendiculairement au cadre.

Dans un mode de réalisation, le chapeau mobile porte deux pièces d'appui en appui sur des faces opposées du support, les pièces d'appui étant montées sur le chapeau de façon que le chapeau entraîne une pièce d'appui dans un sens de déplacement et l'autre pièce d'appui dans l'autre sens de déplacement, les pièces d'appui étant reliées entre elles par au moins un élément élastique de rappel tendant à les rapprocher. Le déplacement du chapeau dans un sens permet de déplacer une pièce d'appui en position ouverte tout en laissant l'autre pièce d'appui en position fermée, l'élément élastique rappelant en outre la pièce d'appui.

Dans un mode de réalisation, des moyens de guidage d'une pièce d'appui sur un chapeau comprennent une fente à profil allongé dans la direction de translation et fermée à au moins une extrémité, et un ergot faisant saillie dans ladite fente La fente peut être prévue sur la pièce d'appui et l'ergot sur le chapeau, ou inversement.

Dans un mode de réalisation, un support comprend deux feuilles de support distantes et des pièces d'appui venant en appui sur des faces opposées des feuilles de support. On peut ainsi facilement prévoir des feuilles de support galbées pour améliorer un aspect esthétique du dispositif d'affichage.

Avantageusement, le support est un diffuseur de lumière, le dispositif comprenant au moins une source de lumière disposée derrière le support, ce qui permet d'obtenir un dispositif d'affichage rétro-éclairé.

Dans un mode de réalisation, le cadre peut comprendre à cet effet sur des côtés opposés des gorges étant adaptées pour recevoir des bords latéraux de la feuille protectrice et la maintenir sur le cadre.

La présente invention et ses avantages seront mieux compris à l'étude de la description détaillée de modes de réalisation pris à titre d'exemple nullement limitatif et illustré par les dessins annexés sur lesquels :
- la figure 1 est une vue de face en élévation d'un dispositif d'affichage éclairé à une face ;
- la figure 2 est une vue de dessus en coupe selon II-II de la figure 1 ;
- la figure 3 est une vue de côté partielle en coupe selon III-III du dispositif de la figure 1 avec une pièce d'appui en position ouverte ;
- la figure 4 est une vue de côté partielle en coupe selon III-III du dispositif de la figure 1 avec une pièce d'appui en position fermée ;
- la figure 5 est une vue de dessous d'un chapeau du dispositif de la figure 1 ;
- la figure 6 est une vue de face en élévation d'un dispositif d'affichage éclairé à deux faces ;
- la figure 7 est une vue en coupe selon VII-VII du dispositif de la figure 6,
- la figure 8 est une vue partielle en coupe transversale selon VIII-VIII du dispositif de la figure 6 ;
- la figure 9 est une vue de dessous d'un chapeau du dispositif de la figure 6 en position de repos; et
- la figure 10 est une vue de dessous du chapeau du dispositif de la figure 6 après un déplacement pour ouvrir une pièce d'appui.

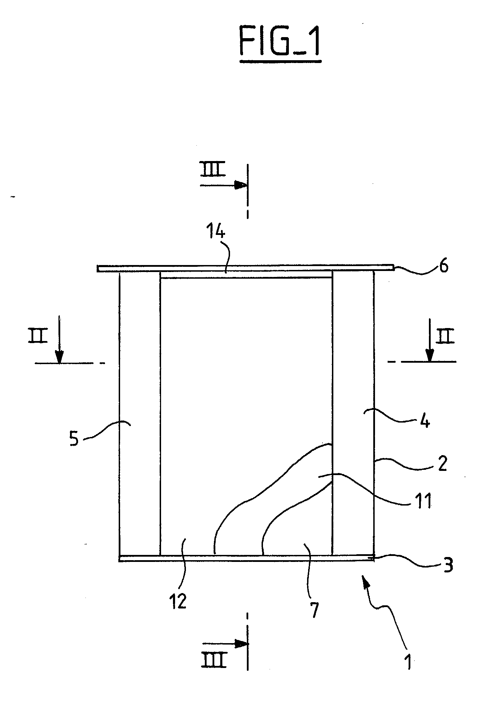

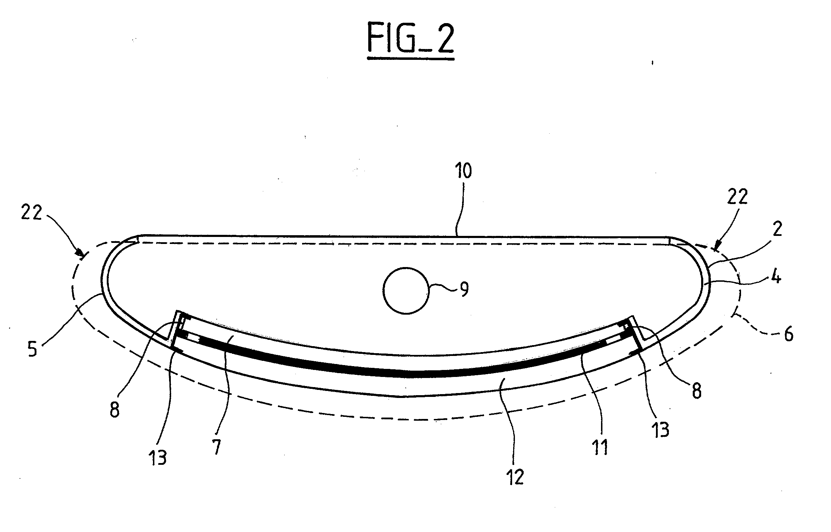

Sur les figures 1 et 2, un dispositif d'affichage 1 conforme à l'invention comprend un cadre 2 comportant une base inférieure 3 (figure 1), deux montants latéraux 4, 5 et un chapeau 6 (en pointillés sur la figure 2), et un support diffuseur de lumière se présentant sous la forme d'une feuille de support translucide 7 dont les bords verticaux sont insérés dans des rainures 8 (figure 2) ménagées dans les montants latéraux 4, 5. Un écartement des rainures 8 est inférieur à la largeur de la feuille de support 7 de façon qu'elle adopte un profil bombé à concavité orientée vers l'intérieur. Derrière la feuille de support 7 est placée une source de lumière 9 et un fond 10 (figure 2). Une affiche 11 est plaquée sur une face extérieure de la feuille de support 7, en étant maintenue par une feuille de protection 12 souple transparente recouvrant l'affiche 11 et retenue dans le cadre 2 en insérant les bords verticaux de la feuille de protection 12 dans des gorges 13 (figure 2) ménagées dans les montants latéraux 4, 5 et parallèles au rainures 8 (figure 2) en étant décalées vers l'extérieur.

L'affiche 11 est maintenue plaquée entre la feuille de support 7 et la feuille de protection 12. La lumière produite par la source lumineuse 9 ponctuelle est diffusée par la feuille de support 7 pour fournir un éclairage sensiblement uniforme à l'arrière de l'affiche 11.

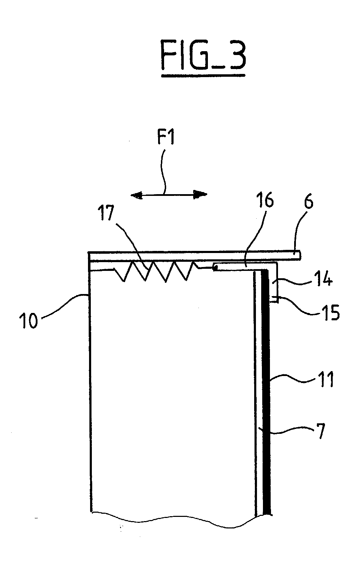

Comme cela est mieux visible sur la figure 3, le dispositif d'affichage 1 comprend une pièce d'appui sous la forme d'une cornière 14 à section en L avec une première section 15 en appui contre le bord supérieur de la face extérieure de la feuille de support 7, et une seconde section 16 revenant perpendiculairement vers l'arrière de la feuille de support 7 en enveloppant le bord supérieur de la feuille de support 7. La cornière s'étend dans une direction perpendiculaire au plan de la figure avec un profil épousant la courbure du bord supérieur de la feuille de support 7.

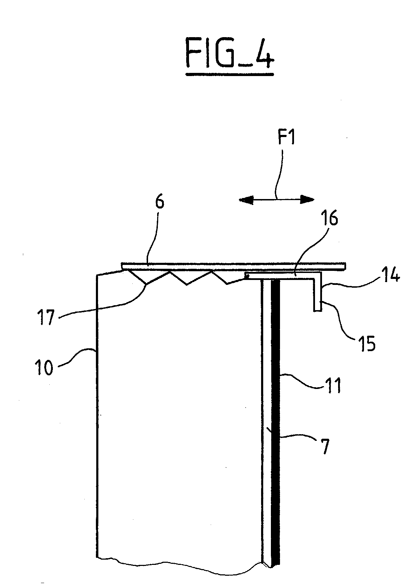

La cornière 14 est fixée sur le chapeau 6 qui est monté mobile en translation perpendiculairement à la feuille de support 7 comme illustré par la flèche F1, de façon que la cornière 14 est déplaçable entre une position fermée illustrée par la figure 3 dans laquelle la première section 15 de la cornière appuie sur le bord supérieur de la feuille de support 7, et une position ouverte mieux visible sur la figure 4 dans laquelle la première section 15 est avancée en saillie de la feuille de support de façon à être espacée de la feuille de support 7 en ménageant un interstice du côté extérieur pour permettre l'insertion d'un bord d'une affiche entre la cornière 14 et la face extérieure de la feuille de support. Un élément élastique de rappel 17 est disposé entre le fond 10 et la seconde section 16 de la cornière 14 de façon à exercer un effort de rappel de la cornière 14 en position fermée.

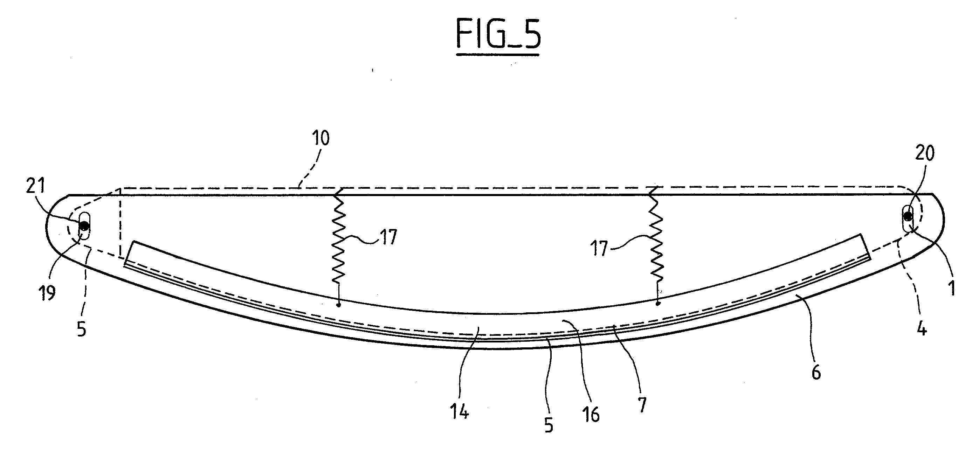

Comme on peut le voir sur la figure 5, le chapeau 6 peut être monté en translation sur les extrémités supérieures des montants latéraux 4, 5 (en pointillés) du cadre 3 en prévoyant des moyens de guidage sous la forme de trous oblongs parallèles 18, 19 formés aux extrémités du chapeau 6 et s'étendant dans la direction de déplacement du chapeau 6 et de la cornière 14 et d'ergots de guidage 20, 21 fixés sur les montants latéraux 4, 5 et venant en saillie dans les trous oblongs 18, 19.

Sur la figure 5, on notera le profil courbe de la cornière 14 prévu pour que la cornière 14 épouse le bord supérieur de la face extérieure de la feuille de support 7. La cornière 14 est déplaçable perpendiculairement à la feuille de support 7, ou plus précisément, la feuille de support 7 étant courbe, la cornière 14 est déplaçable perpendiculairement au plan moyen de la feuille de support 7. De façon plus générale, la cornière 14 doit être déplaçable en translation selon une direction permettant d'écarter la cornière 14 de la face extérieure de la feuille de support 7 pour ménager un espace entre la cornière 14 et la feuille de support 7 permettant l'insertion du bord d'une affiche.

En pratique, pour disposer une nouvelle affiche, la feuille de protection étant retirée 12, un opérateur peut appuyer l'affiche 11 contre la feuille de support 7 à l'aide de ses pouces, plaquer ses paumes contre les montants 4, 5 latéraux, et venir appuyer avec ses indexes à l'arrière du chapeau 6, sur les portions référencées 22 sur la figure 2, de façon à déplacer le chapeau 6 et la cornière 14, puis glisser l'affiche 11 entre la cornière 14 et le support 7, puis relâcher le chapeau 6, la cornière 14 étant rappelée automatiquement en position fermée par l'élément élastique de rappel 17 (figure 3 et 4). Cette position est ergonomique pour le placement de l'affiche qui s'effectue sans difficultés. Ensuite, l'affiche 11 étant maintenue par la cornière 14, l'opérateur peut replacer la feuille de protection 12 souple en la pliant légèrement pour insérer ses bords dans les gorges 13 (figure 2) avant de relâcher la feuille de protection 12 qui restera maintenue par élasticité dans les gorges 13 (figure 2).

En revenant à la figure 2, on notera que le chapeau 6 (en pointillés) présente des bords en saillie du cadre 2 ce qui facilite sa manipulation lors des opérations de changement d'affiche sur le dispositif d'affichage.

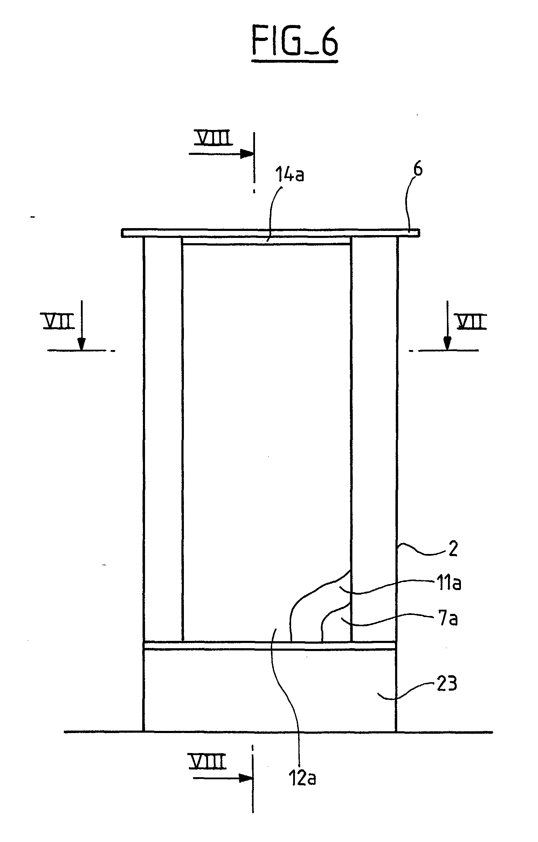

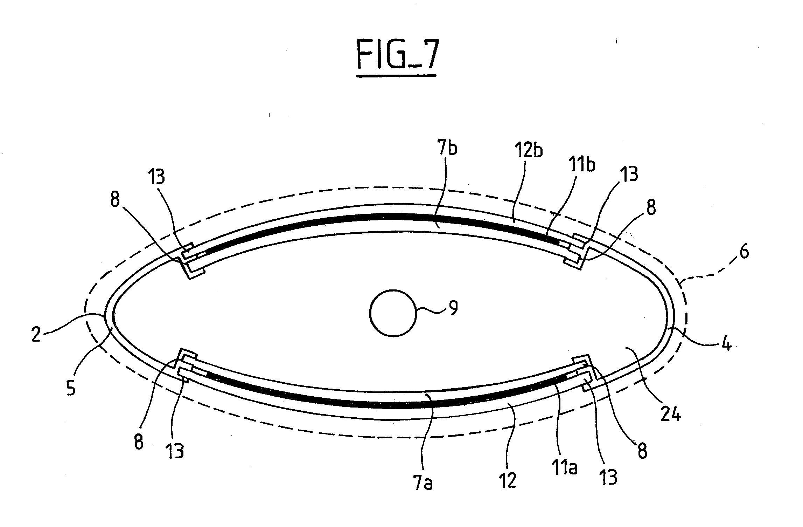

Sur les figures 6 et 7, où les références aux éléments semblables à ceux des figures précédentes ont été reprises, un dispositif d'affichage 1 diffère du mode de réalisation précédent en ce qu'il présente deux faces d'affichage.

Le dispositif d'affichage 1 comprend un pied 23 sur lequel est disposé un cadre 2 portant deux feuilles de support 7a, 7b diffusant la lumière, dont les bords verticaux sont insérés dans des rainures 8 de montants latéraux 4, 5 du cadre 2 de façon que les feuilles de support 7a, 7b sont bombées vers l'extérieur en formant une cavité centrale 24, où se situe une source de lumière 10. Des affiches 11a, 11b sont disposées sur des faces extérieures des feuilles de support 7a, 7b en étant maintenues par des feuilles de protection 12a, 12b comme dans le mode de réalisation précédent.

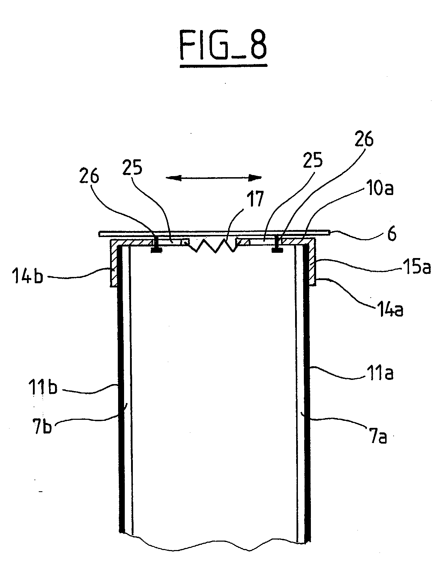

Sur la figure 8, le dispositif d'affichage 1 comprend un chapeau 6 et deux cornières 14a, 14b, identiques à celles du mode de réalisation précédent, une cornière 14a venant en appui sur une face extérieure d'une feuille de support 7a, l'autre cornière 14b venant en appui sur une face extérieure de l'autre feuille de support 7b.

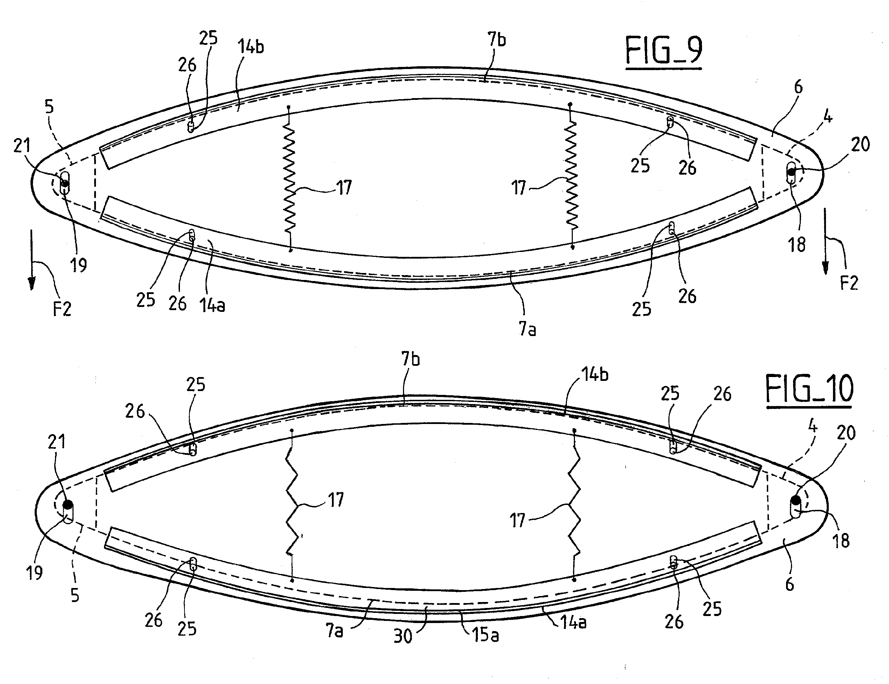

Dans ce mode de réalisation, les cornières 14a, 14b sont reliées par un élément élastique de rappel 17 précontraint pour rapprocher les cornières 14a, 14b. Comme on peut mieux le voir sur la figure 9, les cornières 14a, 14b sont montées mobile en translation sur le chapeau 6 avec une course limitée. Pour ce faire, chaque cornière 14a, 14b et munie de moyens de guidage comprenant deux gorges allongées 25 parallèles entre elles dans lesquelles font saillie des tenons fixes 26 du chapeau 6. Les tenons fixes 26 peuvent être munis d'extrémités libres élargies plus larges que les gorges allongées 25 de façon à maintenir les cornières 14a, 14b sur le chapeau 6. Les tenons 26 pourront par exemple être des vis visées dans le chapeau 6 à travers les gorges allongées 25.

Comme cela est visible sur les figures 9 et 10, Le chapeau 6 lui-même est monté en translation sur les extrémités supérieures des montants latéraux 4, 5 (en pointillés) du cadre 2 en prévoyant des moyens de guidage sous la forme de trous oblongs parallèles 18, 19 formés aux extrémités du chapeau 6 et d'ergots de guidage 20, 21 fixés sur les montants latéraux 4, 5 et venant en saillie dans les trous oblongs 18, 19.

Dans une position de repos ou d'équilibre illustrée par la figure 9, les cornières 14 sont ramenées en contact avec les faces extérieures des feuilles de support 7a, 7b par l'élément élastique de rappel 17. A cet effet, on prendra soin de prévoir un écartement des tenons 26 du chapeau 6 ou une longueur des gorges 25 des cornières 14 suffisants pour permettre un retour des cornières en appui simultanément sur les faces extérieures des feuilles de support 7. Sur la figure 9, les ergots 20 21 des montants 4, 5 se situent sensiblement au milieu des trous oblongs 18, 19.

Pour déplacer une première cornière 14a en position ouverte, le chapeau est déplacé en translation selon les flèches F2. Les trous oblongs 18, 19 coulissent sur les ergots 20, 21. Les tenons 26 du chapeau 6 en saillie dans les gorges 25 de ladite première cornière 14a viennent en butée à une extrémité fermée desdites gorges 25 du côté situé vers l'extérieur relativement au dispositif d'affichage. En poursuivant le déplacement du chapeau 6, les tenons 26 entraînent ladite première cornière 14a, de sorte qu'elle est déplacée en position ouverte et n'est plus en appui sur la face extérieure de la feuille de support 7a correspondante (en pointillés). Les tenons 26 en saillie dans les gorges 25 de la seconde cornière 14b coulissent librement sans atteindre l'extrémité des gorges 26, de sorte que le chapeau 6 n'entraîne pas ladite seconde cornière 14b dans le sens de déplacement considéré. Le déplacement de la première cornière 14a en position ouverte se fait à l'encontre des éléments élastiques de rappel 17 qui sont reliés du côté opposé à la seconde cornière 14b qui est retenue en appui contre la face extérieure de la seconde feuille de support 7b.

On aboutit à la configuration de la figure 10, où la seconde cornière 14b est en appui sur la seconde feuille de support 7b, et la première cornière 14a est avancée relativement à la première feuille de support 7a de sorte qu'il existe un espace 30 entre la première section 15a de la première cornière 14a et la première feuille de support 7a pour le passage d'un bord d'une affiche.

Lorsque le chapeau 6 est relâché, la première cornière 14a sollicitée par l'élément élastique de rappel 17 revient en arrière en appui contre la face extérieure de la première feuille de support 7a, et le chapeau est ramené en position de repos car la cornière 14a entraîne du chapeau 6 par l'intermédiaire de ses gorges 25 interférant avec les tenons 26 du chapeau (figure 9).

Bien entendu, les longueurs des trous oblongs 18, 19 et des gorges allongées 25 sont prévues pour permettre un déplacement suffisant des cornières et chapeau.

Ce mode de réalisation permet d'obtenir de façon simple un dispositif d'affichage à deux faces avec des moyens de maintien d'une affiche qui soit simple qui ne nécessite pas un nombre de pièces important. En effet, la précision d'élément de rappel liant une pièce d'appui sur une face (première cornière 14a) à une autre pièce d'appui sur une face opposée (seconde cornière 14b) permet de limiter un nombre de pièces. La commande de déplacement des cornières 14a, 14b est effectuée à l'aide d'une unique pièce de commande, constituée par un chapeau qui ne nuit pas à l'esthétique du dispositif d'affichage et s'intègre dans un cadre du dispositif d'affichage.

Dans les modes de réalisations mentionnés lorsque qu'un élément comprend un ergot ou un tenon de guidage en translation dans un autre élément, on peut bien entendu prévoir une disposition inverse où ledit élément comprend une gorge ou un trou, l'autre élément comprenant un ergot ou un tenon.

Grâce à l'invention, on obtient un dispositif d'affichage permettant un changement facilité d'affiche. Le dispositif d'affichage est simple et permet un affichage rétro-éclairé, une affiche étant en outre protégée de façon satisfaisante.

## Revendications

1. Dispositif d'affichage comprenant un cadre (2), un support (7) fixé sur le cadre et destiné à recevoir une affiche (11), une feuille protectrice (12) amovible destinée à recouvrir une affiche disposée sur le support, et des moyens de fixation de la feuille protectrice sur le cadre, **caractérisé en ce qu'**il comprend sur au moins un côté du cadre une pièce d'appui (14) mobile relativement au support entre une position ouverte dans laquelle la pièce d'appui est écartée du support et une position fermée dans laquelle la pièce d'appui est en appui sur un bord de ladite face du support pour pincer un bord d'une affiche et maintenir l'affiche avant de placer la feuille protectrice.

2. Dispositif selon la revendication 1, **caractérisé en ce que** la pièce d'appui (14) est mobile en translation relativement au support selon une direction permettant d'écarter la pièce d'appui de ladite face du support (7) pour insérer le bord d'une affiche entre la pièce d'appui et ladite face du support.

3. Dispositif selon l'une des revendications 1 ou 2, **caractérisé en ce que** la pièce d'appui (14) est sollicitée en position fermée par un élément élastique de rappel (17).

4. Dispositif selon l'une des revendications précédentes, **caractérisé en ce qu'**il comprend deux pièces d'appui mobiles (14a, 14b) en appui sur des faces opposées du support et reliées entre elles par au moins un élément élastique de rappel (17) tendant à les rapprocher.

5. Dispositif selon l'une des revendications précédentes, **caractérisé en ce que** le cadre comprend sur ledit au moins un côté un chapeau (6) monté sur le cadre en étant mobile en translation, ledit chapeau étant relié à une pièce d'appui pour entraîner cette dernière en translation vers la position ouverte.

6. Dispositif selon l'une des revendications précédentes, **caractérisé en ce que** le chapeau (6) comprend des portions de préhension faisant saillie perpendiculairement au cadre.

7. Dispositif selon l'une des revendications 5 ou 6, **caractérisé en ce que** le chapeau mobile (6) porte deux pièce d'appui (14a, 14b) en appui sur des faces opposées du support, les pièces d'appui étant montées sur le chapeau de façon que le chapeau entraîne une pièce d'appui dans un sens de déplacement et l'autre pièce d'appui dans l'autre sens de déplacement, les pièces d'appui étant reliées entre elles par au moins un élément élastique de rappel (17) tendant à les rapprocher.

8. Dispositif selon la revendication 7, **caractérisé en ce que** des moyens de guidage d'une pièce d'appui sur un chapeau comprennent une fente (25) à profil allongé dans la direction de translation et fermée à au moins une extrémité, et un ergot faisant saillie dans ladite fente (26).

9. Dispositif selon l'une des revendications précédentes, **caractérisé en ce qu'**un support comprend deux feuilles de support distantes (7a, 7b) et des pièces d'appui (14a, 14b) venant en appui sur des faces opposées des feuilles support.

10. Dispositif selon l'une des revendications précédentes, **caractérisé en ce que** le support est un diffuseur de lumière, le dispositif comprenant au moins une source de lumière (9) disposée derrière le support.

11. Dispositif selon l'une des revendications précédentes, **caractérisé en ce que** le cadre comprend sur deux côtés opposés des gorges (13) adaptées pour recevoir des bords latéraux de la feuille protectrice (12).
